Europäisches Patentamt

European Patent Office

Office européen des brevets

(19)

(11) Publication number: **0 022 641**
**B1**

(12) **EUROPEAN PATENT SPECIFICATION**

(45) Date of publication of patent specification: **01.06.83**

(51) Int. Cl.³: **B 23 Q 5/26, B 23 B 47/22**

(21) Application number: **80302250.8**

(22) Date of filing: **02.07.80**

(54) **Power feed rotary tool.**

(30) Priority: **02.07.79 GB 7922860**

(43) Date of publication of application:
**21.01.81 Bulletin 81/3**

(45) Publication of the grant of the patent:
**01.06.83 Bulletin 83/22**

(84) Designated Contracting States:
**DE FR IT**

(56) References cited:
**CH - A - 542 021**
**CH - A - 573 796**
**DE - A - 1 602 848**
**DE - A - 2 232 471**
**DE - A - 2 624 644**
**FR - A - 2 094 382**
**GB - A - 956 081**
**US - A - 3 663 138**
**US - A - 3 838 934**
**US - A - 4 105 361**

(73) Proprietor: **DESOUTTER, LIMITED**
**319, Edgware Road**
**Colindale London NW9 6ND (GB)**

(72) Inventor: **Dudden, Christopher John**
**24, Ravine Road**
**Boscombe Bournemouth (GB)**
Inventor: **Blomfield, Peter John**
**15, Fir Tree Close**
**Flitwick Bedfordshire (GB)**

(74) Representative: **Lawson, David Glynne et al,**
**MARKS & CLERK 57-60 Lincoln's Inn Fields**
**London WC2A 3LS (GB)**

Courier Press, Leamington Spa, England.

Power feed rotary tool

This invention relates to a power feed rotary tool having an electric motor for rotating a working head of the tool, and a pneumatic system for feeding the working head towards a workpiece, the tool having an elongate housing with the working head at one end thereof, a drive train within the housing for rotating the working head, a piston within the housing for feeding the working head, as it rotates, towards the workpiece, a control rod at the other end of the housing and including an abutment for limiting the feeding of the working head, the electric motor being drivingly connected to the drive train between said ends of the housing. The tool will normally be a drill or a tapper, but the invention could also be applied to a screwdriver or a nut-runner, with or without torque control.

Such a power feed rotary tool is already known from U.S.—A—3663138.

Rotary tools of this type are frequently combined in a jib to form a unit capable of drilling a number of adjacent holes simultaneously in a workpiece. In such applications, it is important that the individual tools can be closely spaced and that the operating controls can be easily set for all tools simultaneously.

This can be achieved according to the present invention in that the control rod is restrained from rotating but is connected to the drive train so as to be fed together with the working head and the elongate housing includes a control top provided with operating controls for the tool and connections to external sources at said other end thereof, and a sleeve and a spacer between the control top and the remainder of the housing, the sleeve having threads at either end which engage with corresponding threads on the control top and the remainder of the housing respectively, and the spacer holding the control top and the remainder of the housing apart so that the control top can be rotated to any angular position relative to the housing, and the sleeve tightened to secure the top.

Therefore, the control top of each tool can be rotated so that the control tops on all tools are in the same relative orientation to an operator at one side of the unit. To alter the position of the control top, the sleeve is slackened sufficiently for the control top to be manually turned to the desired angle. Once the control top is in the correct position, the sleeve can be tightened up against the spacer to hold the top in the correct annular position. Although threads of opposite hand are preferred, the threads could be of the same hand with little difference in the way that this rotation is carried out.

In a preferred embodiment, the control rod is connected to the drive train *via* a thrust bearing on the side of the motor driving connection nearest to said other end of the housing. The control rod itself can be restrained outside the housing against rotation, and the bearing enables the drive train to continue rotating while the control rod is held stationary.

In an alternative form of embodiment, which may be used with the previously described thrust bearing or on its own, a tie rod extends parallel to the displacement axis of the tool between a part fixed to the control rod and a part on the opposite side of the motor drive connection which does not rotate but is displaced together with the working head.

The driving connection between the motor and the drive train is preferably by means of a toothed belt running around appropriately toothed pulleys on the motor output shaft and part of the drive train. A specially adapted device may be provided to tension the drive belt. This device can be plugged into a drive belt housing, and can be operated to pull the motor plate in the direction of tensioning the belt until the spring force of a spring contained in the device is overcome to indicate that the correct tension has been reached in the belt.

The invention will now be further described, by way of example with reference to the accompanying drawings, in which:

Figure 1 is a cross-section through part of a first embodiment of rotary tool according to the invention;

Figure 2 is a cross-section through part of a second embodiment of a rotary tool according to the invention; and

Figure 3 is a schematic illustration of a belt tensioning device according to the invention.

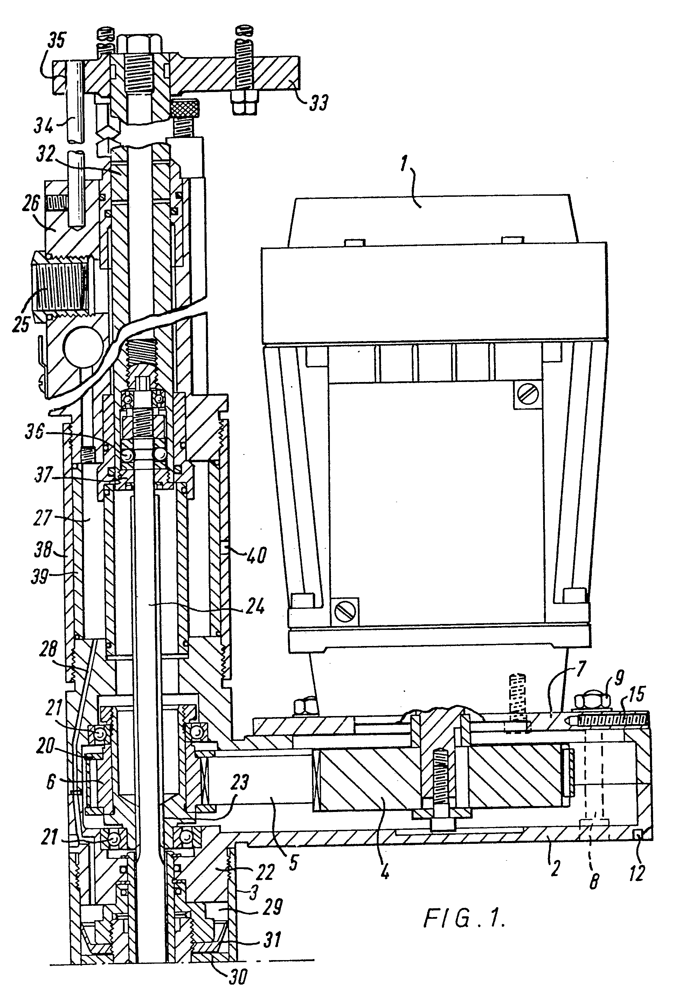

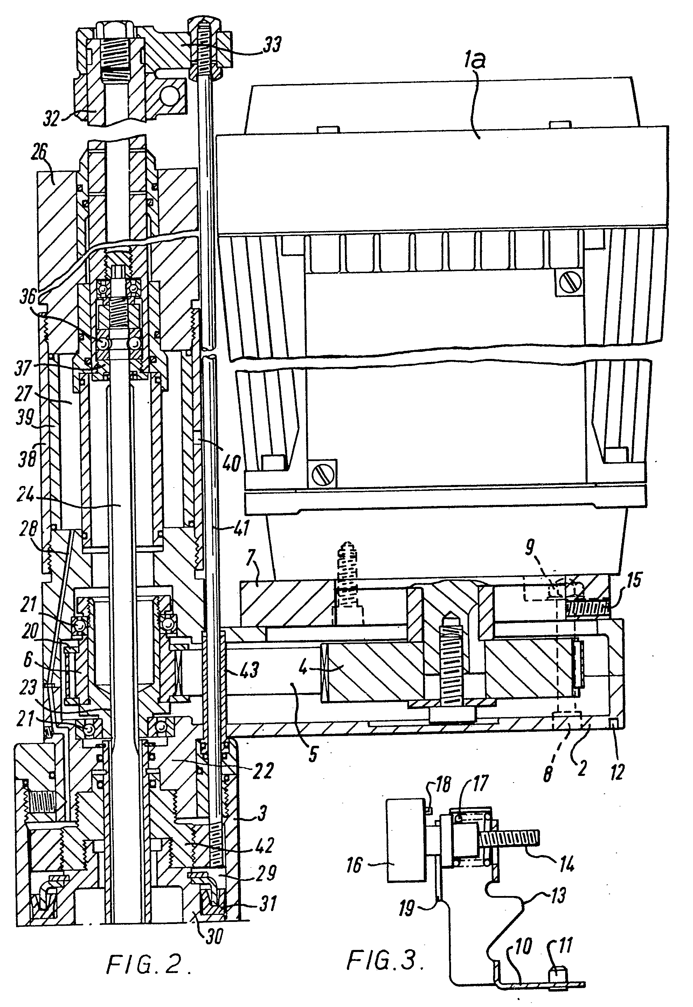

In Figures 1 and 2, the tool has been foreshortened for ease of illustration. The lower end of the tool is not shown, but this will be conventional, and will carry a working head at its lower end. Reference may be made to our British Patent 956,081.

The tool is driven by an electric motor 1. This motor is mounted on a casing 2 which is rigidly attached to the elongate tool housing 3. The motor 1 drives a toothed pulley wheel 4, and a toothed belt 5 runs around the pulley wheel 4 and around another pulley wheel 6 on the axis of the tool. The motor 1 is supported on the casing 2 on a motor plate 7. The plate 7 is secured by a number of bolts 8 with nuts 9 which pass through elongate holes in the plate 7. When the nuts 9 are slackened, the plate 7 can be moved in the direction of tensioning or slackening the belt 5. For correct operation of the drive, it is important that the belt should be at the correct tension. Figure 3 shows a device which can be fitted to the casing 2 to produce the correct tension. The device shown in Figure 3 has a base 10 with retaining studs 11. The studs 11 fit into correspondingly shaped recesses 12 in the underside of the casing 2. The device in Figure 3 also has abutments 13 which contact the side wall of the casing 2, and a threaded adjusting screw 14 which engages in a threaded bore 15 in the motor plate 7. The adjusting screw 14 has a knob 16, and a compression spring 17 is arranged in the device as shown. To tension the belt, the nuts 9 are slackened so that the motor plate 7 is free to slide. The device is then attached to the casing 2 with the lugs 11 in the recesses 12 and the abutments 13 against the casing side. As the screw 14 is screwed into the threaded bore 15, the plate 7 is moved towards it. As the tension in the belt 5 increases, it becomes progressively more difficult to pull the plate 7 against the tension of the belt, and the spring 17 will compress as the knob 16 and screw 14 continue to be turned. The knob 16 has a projection 18. When the desired tension in the belt 5 has been reached, this projection 18 engages between flanges on the face 19 of the device and prevents further rotation. When this condition has been reached, the nuts 9 can be tightened, and once they have been tightened the device of Figure 3 can be removed from the tool. The device thus provides a simple and accurate way of achieving the correct tension in the belt 5. The spring 17 can be chosen so that its characteristics produce the desired tension in the belt. For different sizes of tools, different belt tensions may be necessary, and therefore devices with springs 17 of different characteristics can be employed.

The pulley wheel 6 has flanges 20 for locating the belt correctly on the pulley. The pulley wheel itself is carried in bearings 21 in a fixed housing part 22 which is in fact integral with the motor pulley casing 2. The pulley wheel 6 has an internal bore with splines 23 which engage with a splined spindle 24. The spindle 24 can move longitudinally through the pulley 6 while the splines maintain a driving connection. The spindle 24 is connected to the working head (not shown) of the tool, and transmits the necessary rotation from the motor 1.

To provide the feed motion, compressed air is introduced into the tool *via* an inlet 25 in the control top 26. The compressed air is fed through passages (not shown) to a chamber 27, and from chamber 27 *via* a passage 28 to another chamber 29. Within the chamber 29, there is a piston 30 with a piston seal 31, and when pressure builds up in chamber 29 the piston 30 is displaced downwards together with the spindle 24, which thereby slides through the splines 23.

A control rod 32 extends from the top of the tool above the control top 26. A cross head 33 is clamped to the control rod 32, but can be unclamped and slid along the length of the control rod to provide a coarse stroke adjustment. A guide pin 34 is fixed in the control top 26 and slides through a bore 35 in the cross head 33, to restrain the control rod 32 from rotating, but to permit the control rod to be displaced along the axis of the tool.

The control rod 32 is connected to the upper end of the spindle 24 by a thrust bearing 36. Looking at the assembly around the thrust bearing 36 in more detail, it will be seen that the central bore of the control rod 32 is enlarged, and has a plug 37 at its bottom end which forms an abutment for one side of the bearing 36. As the spindle 24 is moved downwards through the pulley wheel 6, it will therefore pull the control rod 32 with it. Since the control rod 32 is prevented from rotating by the guide pin 34, there will be relative rotation between the spindle 24 and the control rod 32 at the thrust bearing 36.

With the device shown, it is possible to rotate the control top relative to the rest of the tool. It will be appreciated that the tool is asymmetric because of the presence of the electric motor 1 on one side. When a number of tools are mounted close together to form a unit, they may have to be mounted with the electric motor on each tool facing away from the area of the workpiece. In order to enable the adjustments, which are available at the control top, to be set for all the tools simultaneously, it is convenient if the control top of each tool can be rotated so that the control tops on all tools are in the same relative orientation to an operator at one side of the unit. To this end, a sleeve 38 is used to connect the control top 26 and the housing part 22. The sleeve 38 has threads of opposite hand at each end which mate with corresponding threads on the control top and the housing part 22, respectively. A spacer 39 is provided between the housing part 22 and the control top. In order to alter the orientation of the control top relative to the tool, the sleeve 38 is unscrewed, and an aperture 40 is provided in the circumference of the sleeve for engagement by a suitable tool. Once the sleeve 38 has been slackened, the control top can be rotated by hand to the correct orientation, and the sleeve 38 can then be tightened up against the spacer 39 to lock the control top in its new orientation.

The tool shown in Figure 2 is of a larger rating than that shown in Figure 1, and it will be immediately apparent that the electric motor 1*a* is of a larger size relative to the tool housing.

In Figure 2, many parts are the same as in Figure 1, and so they will be designated by the same reference numerals.

With the tool shown in Figure 2, the thrust bearing 36 may not be man enough for the job. To explain why this is so, it is first necessary to be aware that hydraulic check units may be fitted to these tools in the region of the control top. The hydraulic check unit is normally set to come into operation just before the drill tip breaks through the workpiece, to check the speed of advance of the drill at the moment of breakthrough. When drilling with the check unit in operation, a considerable load will fall on the thrust bearing 36 because pneumatic pressure is operating to push the spindle 24 downwards, whereas the resilience of the hydraulic check unit is operating to prevent the control rod 32 from being moved downwards.

Because of this problem, the tool shown in Figure 2 is provided with a tie rod 41 extending between the cross head 33 and a part 42 which moves with the piston 30. Neither the part 42 nor the piston 30 rotate during operation of the tool. The tie rod 41 passes through a sleeved bore 43 in the motor drive pulley housing 2. This tie rod prevents excessive strain being put on the thrust bearing 36, and may make it possible to dispense with the thrust bearing 36 altogether. When the tie rod 41 is in position, the cross head 33 and piston 30 both advance together at the same speed. The use of tie rod 41 can make it possible to dispense with the guide pin 34 shown in Figure 1.

The electric motor 1 or 1a is of a standard type which is readily available commercially. It is possible to exchange the drive pulley 4 for another pulley of a different diameter in order to alter the transmission ratio.

Because the control top and control rod in the tools described can be constructed identically with pneumatically driven tools, it is possible to arrange both pneumatically and electrically driven tools together in the same unit, and to carry out identical adjustments for both types of tool. This can be a very significant advantage when electrically driven tools are used in places where pneumatically driven tools are already in use, and where no more pneumatic tools can be used because of a shortage of compressed air.

## Claims

1. A power feed rotary tool having an electric motor (1) for rotating a working head of the tool, and a pneumatic system for feeding the working head towards a workpiece, the tool having an elongate housing (3) with the working head at one end thereof, a drive train (6, 23, 24) within the housing for rotating the working head, a piston (30) within the housing for feeding the working head, as it rotates, towards the workpiece, a control rod (32) at the other end of the housing and including an abutment (33) for limiting the feeding of the working head, the electric motor (1) being drivingly connected to the drive train between said ends of the housing characterised in that the control rod (32) is restrained from rotating but is connected to the drive train (6, 23, 24) so as to be fed together with the working head and in that the elongate housing (3) includes a control top (26) provided with operating controls and connections to external services at said other end thereof, and a sleeve (38) and a spacer (39) between the control top (26) and the remainder of the housing, the sleeve (38) having threads at either end which engage with corresponding threads on the control top (26) and the remainder of the housing respectively, and the spacer (39) holding the control top (26) and the remainder of the housing apart so that the control top (26) can be rotated to any angular position relative to the housing, and the sleeve (38) tightened to secure the top (26).

2. A tool as claimed in claim 1, characterised in that the control rod (32) is connected to the drive train (6, 23, 24) by a thrust bearing (36).

3. A tool as claimed in claim 1 or claim 2, characterised in that the control rod (32) is connected to the drive train (6, 23, 24) by a tie-rod (41) extending parallel to the tool axis and mounted between a crosshead (33) on the control rod (32) and a non-rotating part (42) which moves with the piston (30).

4. A tool as claimed in any preceding claims, characterised in that a toothed drive belt (5) provides a driving connection between a toothed driving pulley (4) on the motor output shaft and a toothed driven pulley (6) in the drive train.

5. A tool as claimed in claim 4, characterised in that the toothed driven pulley (6) in the drive train is not movable axially of the tool, but has a central splined bore (23), and a correspondingly splined elongate spindle (24) passes through the bore, and is longitudinally movable therethrough as the working head is fed towards the workpiece so that a driving connection between the pulley and the spindle is maintained as the working head is displaced.

6. A tool as claimed in claim 4 or claim 5, characterised by a device for tensioning the drive belt (5) comprising an adjustable motor mount (7) for mounting said motor (1) on said housing (3), means (11, 13) on said device for engaging said housing (3) to retain said device in a fixed position relative to said housing (3), means, including a threaded member (14) for engaging said adjustable motor mount (7), the threaded member (14) being rotatable to draw the driving pulley (4) away from the driven pulley (16), a compression spring (17) associated with the threaded member (14), and means (18, 19) for preventing rotation of the threaded member (14) when a predetermined degree of compression of the spring (17) has been reached to provide the correct tension in the drive belt (5).

7. A tool as claimed in claim 6, characterised in that the threaded member (14) is attached to a knob (16), and the knob (16) has an axial projection (18) which approaches a stationary part (19) of the device as the spring (17) is compressed, and engages said stationary part (19) when said predetermined degree of compression has been reached to prevent rotation of the threaded member (14).

## Patentansprüche

1. Vorschubeinheit für ein rotierendes Werkzeug mit einem Elektromotor (1) für den Drehantrieb eines Werkzeugkopfes des Werkzeuges, sowie einer pneumatischen Einrichtung für die Zustellung des Werkzeugkopfes in Richtung auf ein Werkstück, bei dem das Werkzeug ein hülsenförmiges Gehäuse (3) aufweist, das den Werkzeugkopf an seinem einen Ende trägt, mit einem Getriebe (6, 23, 24) in dem Gehäuse für den Drehantrieb des Werkzeugkopfes, sowie einem Kolben (30) in dem Gehäuse für die Zustellung des Werkzeugkopfes während seiner Drehbewegung in Richtung auf das Werkstück, sowie einer Steuerstange (32) am anderen Ende des Gehäuses, die mit einem Anschlag (33) für eine Begrenzung der Zustellbewegung des Werkzeugkopfes verbunden ist, wobei der Elektromotor (1) mit dem Getriebe zwischen den Enden des Gehäuses verbunden ist, dadurch gekennzeichnet, daß die Steuerstange (32) nicht drehbar aber derart mit dem Getriebe (6, 23, 24) verbunden ist, daß sie zusammen mit dem Werkzeugkopf zugestellt wird, und das längliche Gehäuse (3) einen Steuerkopf (26) mit Steuermitteln und Anschlüssen für eine Bedienung von Außen an seinem einen Ende versehen ist, wobei eine Hülse (38) und ein Abstandshalter (39) zwischen dem Steuerkopf (26) und dem anderen Ende des Gehäuses angeordnet ist, von denen die Hülse (38) an ihren beiden Endabschnitten mit Gewinden versehen ist, welche mit entsprechenden Gewinden des Steuerkopfes (26) und des anderen Abschnittes vom Gehäuse im Eingriff stehen, wobei durch den Abstandshalter (39) der Steuerkopf (26) und das andere Ende des Gehäuses derart zueinander im Abstand gehalten sind, daß der Steuerkopf (26) in jede Winkelstellung in Bezug auf das Gehäuse gedreht werden kann und durch die Hülse (38) der Steuerkopf für eine Befest-igung festzuziehen ist.

2. Vorschubeinheit nach Anspruch 1, dadurch gekennzeichnet, daß die Steuerstange (32) durch ein Drucklager (36) mit der Getriebeeinheit (6, 23, 24) verbunden ist.

3. Vorschubeinheit nach Anspruch 1 oder 2, dadurch gekennzeichnet, daß die Steuerstange (32) mit dem Getriebe (6, 23, 24) durch eine Zugstange (41) verbunden ist, die sich parallel zu der Werkzeugachse erstreckt und eingespannt ist zwischen einem Zugstangenkopf (33) auf der Steuerstange (32) und einem nicht drehenden Teil (42), der sich mit dem Kolben (30) bewegt.

4. Vorschubeinheit nach einem der vorhergehenden Ansprüche, dadurch gekennzeichnet, daß ein mit Zähnen versehener Antriebsriemen (5) für eine Drehverbindung zwischen einem mit Zähnen versehen Antriebsrad (4) auf der Ausgangsstelle des Motors und einem angetriebenen Zahnrad (6) in dem Getriebe vorgesehen ist.

5. Vorschubeinheit nach Anspruch 4, dadurch gekennzeichnet, daß das angetriebene Zahnrad (6) im Getriebe nicht in axialer Richtung des Werkzeuges zu bewegen ist und eine zentralangeordnete verzahnte Bohrung (23) aufweist durch die sich eine entsprechend verzahnte Spindel (24) erstreckt, die innerhalb der Bohrung längsbeweglich ist, wenn der Werkzeugkopf in Richtung auf das Werkstück zugestellt wird, so daß eine Drehverbindung zwischen dem angetriebenen Zahnrad (6) und der Spindel (24) bei einer Verstellung des Werkzeugkopfes aufrechterhalten ist.

6. Vorschubeinheit nach Anspruch 4 oder 5, dadurch gekennzeichnet, daß eine Einrichtung zum Spannen des Antriebsriemens (5) vorgesehen ist, zu der eine einstellbare Motorlagerung (7) gehört für eine Befestigung des Motors (1) an dem Gehäuse (3) sowie Lagermittel (11, 13) auf der Einrichtung zum Anschluß des Gehäuses (3) und zum Halten der Einrichtung in einer feststehenden Stellung relativ zu dem Gehäuse (3) sowie Stellmittel mit einer Stellschraube (14) zum Einstellen der Motorlagerung (7), wobei die Stellschraube (14) durch ein Verstellen das Antriebsrad (4) von dem angetriebenen Rad (6) wegzieht, sowie mit einer Druckfeder (17), die mit der Stellschraube (14) zusammen wirkt, und mit Anschlägen (18, 19) zur Verhinderung eines Drehens der Stellschraube (14), wenn eine vorgegebene Spannung in der Druckfeder (17) gegeben ist für eine geeignete Spannung in dem Antriebsriemen (5).

7. Vorschubeinheit nach Anspruch 6, dadurch gekennzeichnet, daß die Stellschraube (14) mit einem Stellkopf (16) versehen ist und der Stellkopf (16) einen axial vorstehenden Anschlag (18) aufweist, der sich in Richtung auf einen feststehenden Vorsprung (19) der Einrichtung verstellt beim Anspannen der Feder (17) und an diesem feststehenden Anschlag (19) anliegt, wenn eine vorgegebene Spannung erreicht ist zum Verhindern einer weiteren Drehung der Stellschraube (14).

**Revendications**

1. Outil rotatif à avance mécanique comportant un moteur électrique (1) servant à entraîner en rotation une tête de travail de l'outil, et un système pneumatique pour faire avancer la tête de travail en direction d'un pièce à usiner, l'outil possédant un carter allongé (3) muni, à l'une de ses extrémités, de la tête de travail, un système d'entraînement (6, 23, 24) situé dans le carter de manière à entraîner en rotation la tête de travail, un piston (30) situé à l'intérieur du carter pour faire avancer la tête de travail, lorsqu'elle tourne, en direction de la pièce à usiner, une tige de commande (32) située à l'autre extrémité du carter et comportant une butée (33) servant à limiter l'avance de la tête de travail, le moteur électrique (1) étant relié, selon une liaison d'entraînement, au système d'entraînement entre les extrémités du carter, caractérisé en ce que la tige de commande (32) est bloquée contre toute rotation, mais est reliée au système d'entraînement (6, 23, 24) de manière à être avancée ainsi que la tête de travail, et que le carter allongé (3) comporte un organe supérieur de commande (26) muni de commandes de fonctionnement et de connexions à des alimentations extérieures et situé sur l'autre extrémité dudit carter, et un manchon (38) et un entretoise (39) entre l'organe supérieur de commande (26) et le reste du carter, le manchon (38) comportant, sur ses deux extrémités, des filetages qui engrènent avec des filetages correspondants situés respectivement sur l'organe supérieur de commande (26) et sur le reste du carter, et l'entretoise (39) maintenant écartés l'organe supérieur de commande (26) et le reste du carter de sorte que l'organe supérieur de commande (26) est amené par rotation dans toute position angulaire par rapport au carter, et le manchon (38) peut être serré de manière à bloquer l'organe supérieur (26).

2. Outil selon la revendication 1, caractérisé en ce que le tige de commande (32) est raccordée au système d'entraînement (6, 23, 24) au moyen d'un palier de butée (36).

3. Outil selon la revendication 1 ou 2, caractérisé en ce que la tige de commande (32) est raccordée au système d'entraînement (6, 23, 24) par une barre d'accouplement (41) s'étendant parallèlement à l'axe de l'outil et montée entre une tête transversale (33) située sur la tige de commande (32) et une pièce non tournante (42) qui se déplace avec le piston (30).

4. Outil selon l'une quelconque des revendications précédentes, caractérisé en ce qu'une courroie d'entraînement dentée (5) fournit une liaison d'entraînement entre une poulie d'entraînement d'entrée (4) montée sur l'arbre de sortie du moteur et une poulie dentée entraîné (6) située dans le système d'entraînement.

5. Outil selon la revendication 4, caractérisé en ce que la poulie dentée entraînée (6) située dans le système d'entraînement n'est pas déplaçable suivant la direction axiale de l'outil, mais possède un perçage central cannelé (23) et qu'une broche allongée cannelée de façon correspondante (24) s'étend à travers le perçage et est déplaçable longitudinalement à travers ce dernier lorsque la tête de travail est avancée en direction de la pièce à usiner de sorte qu'une liaison d'entraînement entre la poulie et la broche est maintenue lorsque la tête de travail est déplacée.

6. Outil selon la revendication 4 ou 5, caractérisé par un dispositif pour mettre en tension la courroie d'entraînement (5), comprenant un support réglable (7) du moteur servant au montage dudit moteur (1) sur ledit carter (3), des moyens (11, 13) situés sur ledit dispositif pour contacter ledit carter (3) afin de maintenir ledit dispositif dans une position fixe par rapport audit carter (3), des moyens incluant un organe fileté (14) pour engrener avec ledit support réglable (7) du moteur, l'organe fileté (14) étant apte à tourner de manière à écarter la poulie d'entraînement (4) à partir de la poulie entraînée (6), un ressort de compression (17) associé à l'organe fileté (14), et des moyens (18, 19) pour empêcher une rotation de l'organe fileté (14) lorsqu'un taux prédéterminé de compression du ressort (17) a été atteint pour fournir la tension correcte la courroie d'entraînement (5).

7. Outil selon la revendication 6, caractérisé en ce que l'organe fileté (14) est fixé à un bouton (16) et que le bouton (16) possède une partie saillante axiale (18) qui se rapproche d'une partie fixe (19) du dispositif lorsque le ressort (17) est comprimé, et contacte ladite partie fixe (19) lorsque ledit taux prédéterminé de compression a été atteint afin d'empêcher une rotation de l'organe fileté (14).

FIG.1.

FIG. 2.

FIG. 3.